# EUROPEAN PATENT APPLICATION

(11) **EP 1 900 710 A1**
(43) Date of publication of application: **19.03.2008**
(21) Application number: 07253439.9
(22) Date of filing: 31.08.2007
(51) Int. Cl.: C04B 35/571, C04B 35/71

(54) **Method of producing inorganic molded item, and inorganic molded item obtained using the method**

(30) Priority: 01.09.2006 JP 2006238314; 01.09.2006 JP 2006238315
(71) Applicant: Shin-Etsu Chemical Co., Ltd., Tokyo (JP)
(72) Inventor: Aoki, Yoshitaka, c/o Shin-Etsu Chemical Co., Ltd., Annaka-shi, Gunma-ken (JP)
(74) Representative: Hallybone, Huw George

(57) **Abstract**

A method of producing an inorganic molded item comprising a matrix composed of an inorganic ceramic and an inorganic filler dispersed within the matrix is provided. The method includes heating a silicone-based molded object comprising a matrix composed of a solid silicone and an inorganic filler dispersed within the matrix, under a non-oxidizing atmosphere at a temperature within a range from 400 to 1,500°C. This method suffers almost no volumetric shrinkage, and yields a molded item with the intended shape and dimensions, and a favorable level of strength.

## Description

### BACKGROUND OF THE INVENTION

### 1. Field of the invention

The present invention relates to a method of producing an inorganic molded item that can be applied to ceramic circuit boards, magnetic compositions of dielectric materials, fireproof electrical cables, dielectric heating coils, electrical equipment insulating rings, electronic mounting techniques and the like.

### 2. Description of the Prior Art

In recent years, heightened demand for mobile telephones, flat panel televisions and the like has lead to increased demands on semiconductor technology. The substrates for mounting semiconductors are increasingly using ceramic materials such as alumina, silicon nitride and glass ceramics which offer excellent insulation properties and a high level of thermal conductivity. Of such ceramic materials, the applicability of Low Temperature Cofired Ceramics (LTCC), which are low-temperature sinterable glass ceramics in which conductors with a high degree of electric conductivity such as Ag, Cu and Au can be fired simultaneously, continues to grow.

Furthermore, one known example of a method of producing glass ceramic substrates by low-temperature firing is a method in which an organic binder resin such as polypropylene carbonate, an alkyl methacrylate resin, PVA or the like is added to the ceramic raw material, and the resulting mixture is then molded and fired. In this method, a step is required for removing the binder resin, but this step leads to an unavoidable volumetric shrinkage of the molded item, as well as an accompanying reduction in the strength of the molded item.

Techniques for patterning printed circuit boards include lithography methods that use a photoresist and printing methods, and whereas lithography methods require steps for resist application and removal, printing methods do not require these steps and are consequently more economical.

Thick film pastes that function as the materials for producing low-temperature sinterable ceramics are already known (patent references 1, 2 and 3), but because these pastes comprise an organic compound such as a cellulose, PVA, polypropylene carbonate or alkyl methacrylate as a binder, a step is required for removing the binder, and consequently insufficient strength caused by volumetric shrinkage tends to be a problem.

Furthermore, in methods wherein the thick film paste is applied using a printing technique such as screen printing, conventionally, flow of the thick film paste in the period between printing and drying has tended to cause so-called "sag" problems.

The patent reference 4 discloses a method of forming an inorganic insulating layer by applying a coating material comprising a silicone compound and a low melting point glass as the primary components to a naked electrical wire or the like during winding thereof , and then conducting firing after completion of the winding, thereby producing a solid solution via decomposition mineralization of the silicone compound and melting of the low melting point glass, thus forming the inorganic insulating layer. More specifically, in the examples, a mixture comprising a silicone resin and a low melting point glass powder is diluted with xylene, and following application to a wound coil and subsequent blow drying, the silicone resin is cured at 200°C, and firing is then conducted at 550°C. The atmosphere during firing is not disclosed, but it is assumed that the firing is conducted in air. In this method, organic groups are eliminated during firing, resulting in a reduction in strength caused by volumetric shrinkage.
[Patent Reference 1] JP6-232515A
[Patent Reference 2] JP9-115331A
[Patent Reference 3] JP2004-59358A
[Patent Reference 4] JP7-322579A

### SUMMARY OF THE INVENTION

Accordingly, an object of the present invention is to provide a method of easily producing an inorganic molded item which suffers almost no volumetric shrinkage during the production process and therefore yields a molded item with the intended shape and dimensions and the desired level of strength, and which is useful as a conductor, a dielectric material or a resistor or the like, and also to provide an inorganic molded item obtained using this method.

As a result of intensive investigation aimed at achieving the above object, the inventors of the present invention developed an inorganic molded item comprising a matrix composed of an inorganic ceramic, and an inorganic filler dispersed within the matrix, as well as a method of producing the inorganic molded item.

In other words, the present invention provides a method of producing an inorganic molded item comprising a matrix composed of an inorganic ceramic and an inorganic filler dispersed within the matrix, the method comprising the step of heating a silicone-based molded object comprising a matrix composed of a solid silicone and an inorganic filler dispersed within the matrix under a non-oxidizing atmosphere at a temperature within a range from 400 to 1,500°C, thereby subjecting the solid silicone to inorganic ceramicization.

Furthermore, the present invention also provides an inorganic molded item comprising a matrix composed of an inorganic ceramic and an inorganic filler dispersed within the matrix, obtainable by the above method.

According to a production method of the present invention, volumetric shrinkage of the silicone molded object during the firing stage is unlikely, meaning the shape and dimensions of the molded object can be maintained, and the problem of insufficient strength can be avoided. As a result, an inorganic molded item of the desired shape and with the expected level of strength can be obtained.

In an inorganic molded item of the present invention, the inorganic ceramic portion that functions as the matrix is amorphous, namely, is obtained as a glass ceramic. Accordingly, the method of the present invention can be used as a low-temperature sintering method that enables the cofiring of conductors with a high degree of electric conductivity.

In the production method of the present invention, because the silicone-based molded object that functions as the starting material can be prepared by molding a curable silicone composition into a desired shape, the favorable workability typically exhibited by organic materials can be utilized during the molding stage, and moreover, the resulting product exhibits a favorable heat resistance of an inorganic material.

### DETAILED DESCRIPTION OF THE PREFERRED EMBODIMENTS

### [Silicone-based Molded Object]

The silicone-based molded object used as the starting material in the production method of the present invention comprises a matrix composed of the solid silicone, and an inorganic filler dispersed within the matrix. This silicone-based molded object can be obtained by curing a curable silicone composition comprising the inorganic filler.

### - Curable Silicone Composition -

Conventional compostions can be used as the curable silicone composition. The curable silicone composition is preferably either a semisolid that exhibits plasticity or a liquid at room temperature.

In this specification, unless stated otherwise, "room temperature" refers to a temperature within a range from 15 to 35°C.

Specific examples of the curable silicone composition include heat-curable silicone compositions such as addition-curable compositions; photocurable silicone compositions such as ultraviolet light-curable or electron beam-curable compositions; and condensation-curable silicone compositions.

In the case of a heat-curable composition, the curable silicone composition is converted to a silicone cured object by curing the composition by heating. Examples of heat-curable silicone compositions include addition-curable silicone compositions.

Examples of addition-curable silicone compositions include silicone compositions in which a straight-chain organopolysiloxane having alkenyl groups such as vinyl groups at the molecular chain terminals (either at one terminal or both terminals) and/or at non-terminal positions within the molecular chain, and an organohydrogenpolysiloxane are reacted (via a hydrosilylation reaction) in the presence of a platinum group metal-based catalyst to effect the curing process.

Examples of photocurable silicone compositions include ultraviolet light-curable silicone compositions and electron beam-curable silicone compositions.

Examples of ultraviolet light-curable silicone compositions include silicone compositions that cure by the energy of ultraviolet light having a wavelength within a range from 200 to 400 nm. In this case, there are no particular restrictions on the curing mechanism. Specific examples of suitable compositions include acrylic silicone-based silicone compositions comprising an organopolysiloxane containing acryloyl groups or methacryloyl groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as in heat-curable, addition reaction-type compositions, and cationic polymerization-based silicone compositions comprising an organopolysiloxane containing epoxy groups and an onium salt catalyst, and any of these compositions can be used as an ultraviolet light-curable silicone composition.

Examples of electron beam-curable silicone compositions that can be used include any silicone compositions that are cured by a radical polymerization that is initiated by irradiating an organopolysiloxane containing radical polymerizable groups with an electron beam.

Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with alkoxy group-containing siloxy groups or alkoxy group-containing siloxyalkyl groups such as trialkoxysiloxy groups, dialkoxyorganosiloxy groups, trialkoxysiloxyethyl groups or dialkoxyorganosiloxyethyl groups, in the presence of a condensation reaction catalyst such as an organotin-based catalyst.

However, in order to obtain the above solid silicone with favorable dimensional precision, an addition-curable composition with minimal volume shrinkage is preferred.

As follows is a detailed description of representative examples of the curable silicone compositions described above, with the focus of the description on those components other than the inorganic filler, although all of the compositions also include an inorganic filler as an essential component, and may also include other conventional additives as required.

### <Addition-curable Silicone Compositions>

Specific examples of suitable addition-curable silicone compositions include addition-curable silicone compositions comprising:
(a) an organopolysiloxane containing at least two alkenyl groups bonded to silicon atoms,
(b) an organohydrogenpolysiloxane containing at least two hydrogen atoms bonded to silicon atoms (namely, SiH groups), in sufficient quantity that the quantity of hydrogen atoms bonded to silicon atoms within this component (b) relative to each 1 mol of alkenyl groups within the entire curable silicone composition is within a range from 0.1 to 5.0 mols, and
(c) an effective quantity of a platinum group metal-based catalyst.

### - Component (a)

The organopolysiloxane of the component (a) is the base polymer of the addition-curable silicone composition, and contains at least two alkenyl groups bonded to silicon atoms. Conventional organopolysiloxanes can be used as the component (a). The weight average molecular weight of the organopolysiloxane of the component (a), measured by gel permeation chromatography and referenced against polystyrene standards, is preferably within a range from approximately 3,000 to 300,000. Moreover, the viscosity at 25°C of the organopolysiloxane of the component (a) is preferably within a range from 100 to 1,000,000 mPa·s, and is even more preferably from 200 to 100,000 mPa·s. The organopolysiloxane (a) is basically either a straight-chain structure with no branching, in which the molecular chain (the principal chain) comprises repeating diorganosiloxane units ((R¹)₂SiO_{2/2} units), and both molecular chain terminals are blocked with triorganosiloxy groups ((R¹)₃SiO_{1/2} units), or a cyclic structure with no branching in which the molecular chain comprises repeating diorganosiloxane units, although the structure may also include partial branch structures comprising R¹SiO_{3/2} units and/or SiO_{4/2} units (here, R¹ represents identical or different, unsubstituted or substituted monovalent hydrocarbon groups that preferably contain from 1 to 10 carbon atoms, and even more preferably from 1 to 8 carbon atoms).

Examples of the component (a) include organopolysiloxanes containing at least two alkenyl groups within each molecule, represented by an average composition formula (1) shown below:

R¹ₐSiO_{(4-a)/2} (1)

(wherein, R¹ is as defined above, and a represents a positive number within a range preferably from 1.5 to 2,8, more preferably from 1.8 to 2.5, and even more preferably from 1.95 to 2.05).

Examples of the monovalent hydrocarbon groups represented by R¹ include alkyl groups such as a methyl group, ethyl group, propyl group, isopropyl group, butyl group, isobutyl group, tert-butyl group, pentyl group, neopentyl group, hexyl group, cyclohexyl group, octyl group, nonyl group or decyl group; aryl groups such as a phenyl group, tolyl group, xylyl group or naphthyl group; aralkyl groups such as a benzyl group, phenylethyl group or phenylpropyl group; alkenyl groups such as a vinyl group, allyl group, propenyl group, isopropenyl group, butenyl group, hexenyl group, cyclohexenyl group or octenyl group; and groups in which either a portion of, or all of, the hydrogen atoms within the above hydrocarbon groups have been substituted with a halogen atom such as a fluorine, bromine or chlorine atom, a cyano group or the like, including a chloromethyl group, chloropropyl group, bromoethyl group, trifluoropropyl group, and cyanoethyl group.

In this case, at least two of the R¹ groups represent alkenyl groups (which preferably contain from 2 to 8 carbon atoms, and even more preferably from 2 to 6 carbon atoms). The alkenyl group quantity relative to the total of all the organic groups bonded to silicon atoms (that is, the proportion of alkenyl groups amongst all the unsubstituted and substituted monovalent hydrocarbon groups represented by R¹ within the above average composition formula (1)) is typically within a range from 0.01 to 20 mol%, and is preferably from 0.1 to 10 mol%. In those cases where the organopolysiloxane of the component (a) has a straight-chain structure, these alkenyl groups may be bonded solely to silicon atoms at the molecular chain terminals, solely to non-terminal silicon atoms within the molecular chain, or to both these types of silicon atoms, although from the viewpoints of the composition curing rate and the physical properties of the resulting cured product, at least one alkenyl group is preferably bonded to a silicon atom at a molecular chain terminal.

The aforementioned R¹ groups may essentially be any of the above groups, although the alkenyl groups are preferably vinyl groups, and the monovalent hydrocarbon groups other than the alkenyl groups are preferably methyl groups or phenyl groups.

Specific examples of the component (a) include compounds represented by the general formulas shown below.

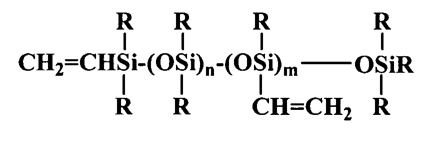

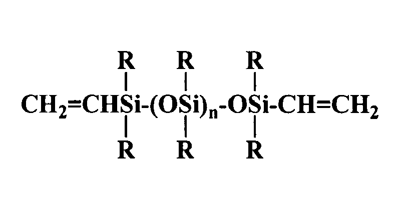

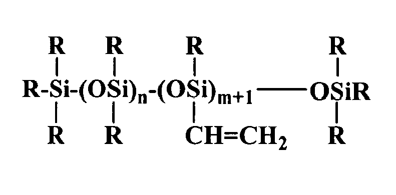

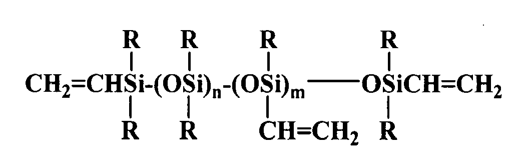

In the above general formulas, R has the same meaning as R¹ with the exception of not including alkenyl groups. m and n are integers that satisfy m ≥ 1 and n ≥ 0, respectively, and the value of m+n is a number that enables the molecular weight and viscosity of the organopolysiloxane to satisfy the values described above.

### - Component (b)

The organohydrogenpolysiloxane of the component (b) contains at least two (typically from 2 to 200), and preferably three or more (typically from 3 to 100) hydrogen atoms bonded to silicon atoms (SiH groups). The component (b) reacts with the component (a) and functions as a cross-linking agent. There are no particular restrictions on the molecular structure of the component (b), and conventionally produced linear, cyclic, branched, or three dimensional network (resin-like) organohydrogenpolysiloxanes can be used. In those cases where the component (b) has a linear structure, the SiH groups may be bonded solely to silicon atoms at the molecular chain terminals, or solely to non-terminal silicon atoms within the molecular chain, or may also be bonded to both these types of silicon atoms. Furthermore, the number of silicon atoms within each molecule (namely, the polymerization degree) is typically within a range from 2 to 300, and is preferably from 4 to 150, and an organohydrogenpolysiloxane that is liquid at 25°C is particularly favorable as the component (b).

Examples of the component (b) include organohydrogenpolysiloxanes represented by an average composition formula (2) shown below.

R²_{b}H_{c}SiO_{(4-b-c)/2} (2)

(wherein, R² represents identical or different, unsubstituted or substituted monovalent hydrocarbon groups of 1 to 10 carbon atoms, b and c represent positive numbers that preferably satisfy 0.7 ≤ b ≤2.1, 0.001 ≤ c ≤ 1.0 and 0.8 ≤ b+c ≤ 3.0, and more preferably satisfy 1.0 ≤ b ≤2.0, 0.01 ≤ c ≤ 1.0 and 1.5 ≤ b+c ≤ 2.5)

Examples of the group R² include the same groups as those described above for the group R¹ within the above average composition formula (1) (but excluding the alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of dimethylsiloxane and methylhydrogensiloxane with both terminals blocked with trimethylsiloxy groups, dimethylpolysiloxane with both terminals blocked with dimethylhydrogensiloxy groups, copolymers of dimethylsiloxane and methylhydrogensiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, dimethylsiloxane and diphenylsiloxane with both terminals blocked with dimethylhydrogensiloxy groups, copolymers of methylhydrogensiloxane, dimethylsiloxane and methylphenylsiloxane with both terminals blocked with dimethylhydrogensiloxy groups, copolymers composed of (CH₃)₂HSiO)_{1/2} units, (CH₃)₃SiO)_{1/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units and (C₆H₅)₃SiO_{1/2} units.

The quantity added of the component (b) must be sufficient that the quantity of SiH groups within this component (b), relative to each 1 mol of alkenyl groups bonded to silicon atoms within the component (a), is within a range from 0.1 to 5.0 mols, preferably from 0.5 to 3.0 mols, and even more preferably from 0.8 to 2.0 mols. If the quantity added of the component (b) yields a quantity of SiH groups that is less than 0.1 mols, then the cross-linking density of the cured product obtained from the composition is too low, which has an adverse effect on the heat resistance of the cured product. In contrast, if the quantity added yields a quantity of SiH groups that exceeds 5.0 mols, then foaming problems caused by a dehydrogenation reaction may occur within the cured product, and the heat resistance of the resulting cured product may also deteriorate.

### - Component (c)

The platinum group metal-based catalyst of the component (c) is used for accelerating the addition curing reaction (the hydrosilylation) between the component (a) and the component (b). Conventional platinum group metal-based catalysts can be used as the component (c), although the use of platinum or a platinum compound is preferred. Specific examples of the component (c) include platinum black, platinic chloride, chloroplatinic acid, alcohol-modified chloroplatinic acid, and coordination compounds of chloroplatinic acid with olefins, aldehydes, vinylsiloxanes or acetylene alcohols.

The quantity added of the component (c) need only be an effective catalytic quantity, may be suitably increased or decreased in accordance with the desired curing rate, and yields a mass of the platinum group metal relative to the mass of the component (a) that falls within a range preferably from 0.1 to 1,000 ppm, and more preferably from 1 to 200 ppm.

### <Ultraviolet Light-curable Silicone Compositions>

Specific examples of suitable ultraviolet light-curable silicone compositions include ultraviolet light-curable silicone compositions comprising:
(d) an ultraviolet light-reactive organopolysiloxane, and
(e) a photopolymerization initiator.

### - Component (d)

The ultraviolet light-reactive organopolysiloxane of the component (d) typically functions as the base polymer of the ultraviolet light-curable silicone composition. Although there are no particular restrictions on the component (d), the component (d) is an organopolysiloxane containing preferably at least two, more preferably from 2 to 20, and most preferably from 2 to 10, ultraviolet light-reactive groups within each molecule. The plurality of ultraviolet light-reactive groups that exist within this organopolysiloxane may be the same or different.

The organopolysiloxane of the component (d) basically comprises molecular chain comprising repeating diorganosiloxane units, and is preferably either a straight-chain structure with no branching, in which the molecular chain comprises repeating diorganosiloxane units, and both molecular chain terminals are blocked with triorganosiloxy groups or triorganosilyl-substituted alkyl groups such as triorganosilylethyl groups, or a cyclic structure with no branching in which the molecular chain comprises repeating diorganosiloxane units, although the structure may also include partial branched structures such as trifunctional siloxane units and SiO₂ units. In those cases where the organopolysiloxane of the component (d) has a straight-chain structure, the ultraviolet light-reactive groups may exist solely at the molecular chain terminals, solely at non-terminal positions within the molecular chain, or may also exist at both these positions, although structures containing ultraviolet light-reactive groups at least at the molecular chain terminals are preferred.

Examples of suitable ultraviolet light-reactive groups include alkenyl groups such as a vinyl group, allyl group or propenyl group; alkenyloxy groups such as a vinyloxy group, allyloxy group, propenyloxy group or isopropenyloxy group; aliphatic unsaturated groups other than alkenyl groups, such as an acryloyl group or methacryloyl group; as well as a mercapto group, epoxy group, or hydrosilyl group, and of these, an acryloyl group, methacryloyl group, mercapto group, epoxy group or hydrosilyl group is preferred, and an acryloyl group or methacryloyl group is more preferred.

The ultraviolet light-reactive groups may be directly bonded to silicon atoms constituting the backbone chain of the organopolysiloxane of the component (d) or bonded to silicon atoms via linkage groups such as alkylene groups, depending on the types of the ultraviolet light-reactive groups.

Although there are no particular restrictions on the viscosity of the organopolysiloxane, the viscosity at 25°C is preferably at least 25 mPa·s, and is even more preferably within a range from 100 to 10,000,000 mPa·s, and even more preferably from 100 to 100,000 mPa·s.

Examples of preferred forms of the component (d) include organopolysiloxanes containing at least two ultraviolet light-reactive groups, represented by either a general formula (3a) shown below: 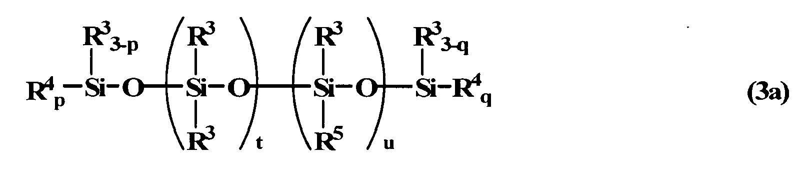 [wherein, R³ represents identical or different, unsubstituted or substituted monovalent hydrocarbon groups that contain no ultraviolet light-reactive groups, R⁴ and R⁵ each represent identical or different ultraviolet light-reactive groups or groups that contain an ultraviolet light-reactive group, t represents an integer from 5 to 1,000, u represents an integer from 0 to 100, p represents an integer from 0 to 3, and q represents an integer from 0 to 3, provided that p+q+u ≥ 2]
or a general formula (3b) shown below: 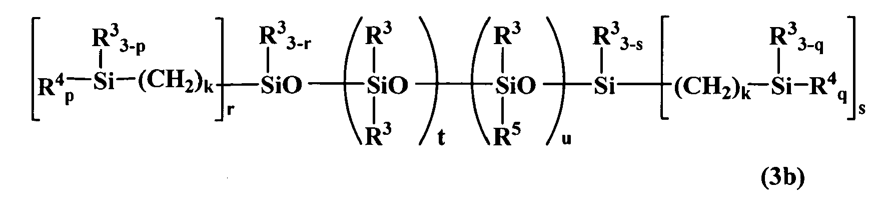 [wherein, R³, R⁴, R⁵, t, u, p and q are as defined above for the general formula (3a), k represents an integer from 2 to 4, and r and s each represent an integer from 1 to 3, provided that pr+qs+u ≥ 2].

In the above general formulas (3a) and (3b), R³ represents identical or different, unsubstituted or substituted monovalent hydrocarbon groups that contain no ultraviolet light-reactive groups, and preferably contain from 1 to 20, even more preferably from 1 to 10, and most preferably from 1 to 8 carbon atoms. Examples of the monovalent hydrocarbon groups represented by R³ include alkyl groups such as a methyl group, ethyl group, propyl group, butyl group, isopropyl group, isobutyl group, tert-butyl group, hexyl group, 2-ethylhexyl group, 2-ethylbutyl group, or octyl group; cycloalkyl groups such as a cyclohexyl group or cyclopentyl group; aryl groups such as a phenyl group, tolyl group, xylyl group, naphthyl group, or diphenyl group; aralkyl groups such as a benzyl group or phenylethyl group; and groups in which a portion of, or all of, the hydrogen atoms bonded to carbon atoms within the above hydrocarbon groups have been substituted with a halogen atom, cyano group, amino group, carboxyl group or the like, including a chloromethyl group, trifluoropropyl group, 2-cyanoethyl group, and 3-aminopropyl group, and of these, a methyl group or phenyl group is preferred, and a methyl group is more preferred. Furthermore, the monovalent hydrocarbon group represented by R³ may also include one or more sulfonyl groups, ether linkages (-O-), carbonyl groups or the like within the group skeleton.

In the above general formulas (3a) and (3b), examples of the ultraviolet light-reactive groups represented by R⁴ and R⁵ are as described above. The groups containing an ultraviolet light-reactive group mean groups which are formed of an ultraviolet light-reactive group and at least one linkage group to which the ultraviolet light-reactive group is bonded, and are bonded to silicon atoms at the linkage group, and specific examples thereof include a 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{(2-methacryloyloxyethoxy)dimethylsilyl}ethyl group, 2-{bis(2-acryloyloxyethoxy)methylsilyl}ethyl group, 2-{(2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl} ethyl group, 2-{bis(1-acryloyloxy-3-methacryloyloxy-2-propoxy)methylsilyl}ethyl group, and 2-{(1-acryloyloxy-3-methacryloyloxy-2-propoxy)dimethylsilyl}ethyl group, examples of preferred groups include a 3-methacryloyloxypropyl group, 3-acryloyloxypropyl group, 2-{bis(2-methacryloyloxyethoxy)methylsilyl}ethyl group, 2-{(2-methacryloyloxyethoxy)dimethylsilyl}ethyl group, 2-{bis(2-acryloyloxyethoxy)methylsilyl}ethyl group, 2-{(2-acryloyloxyethoxy)dimethylsilyl}ethyl group, 2-{bis(1,3-dimethacryloyloxy-2-propoxy)methylsilyl} ethyl group, 2-{(1,3-dimethacryloyloxy-2-propoxy)dimethylsilyl}ethyl group, 2-{bis(1-acryloyloxy-3-methacryloyloxy-2-propoxy)methylsilyl} ethyl group, and 2-{(1-acryloyloxy-3-methacryloyloxy-2-propoxy)dimethylsilyl}ethyl group, and examples of more preferred groups include a 3-acryloyloxypropyl group, 2-{bis(2-methacryloyloxyethoxy)methylsilyl}ethyl group, 2-{(2-methacryloyloxyethoxy)dimethylsilyl}ethyl group, 2-{(2-acryloyloxyethoxy)dimethylsilyl} ethyl group, 2-{bis(1,3-dimethacryloyloxy-2-propoxy)methylsilyl}ethyl group, and 2-{bis(1-acryloyloxy-3-methacryloyloxy-2-propoxy)methylsilyl} ethyl group.

In general formulas (3a) and (3b), R⁴ and R⁵ may be either the same or different, and individual R⁴ and R⁵ groups may be the same as, or different from, other R⁴ and R⁵ groups.

In the above general formulas (3a) and (3b), t is typically an integer within a range from 5 to 1,000, and is preferably an integer from 10 to 800, and more preferably from 50 to 500. u is typically an integer within a range from 0 to 100, and is preferably an integer from 0 to 50, and more preferably from 0 to 20. p is typically an integer within a range from 0 to 3, and is preferably an integer from 0 to 2, and more preferably either 1 or 2. q is preferably an integer from 0 to 2, and is more preferably either 1 or 2. In the above general formula (3b), k is typically an integer within a range from 2 to 4, and is preferably either 2 or 3. r and s each represent an integer from 1 to 3, and preferably represent either 1 or 2. Moreover, as described above, the organopolysiloxanes represented by the above general formulas (3a) and (3b) contain at least two of the above ultraviolet light-reactive groups, and consequently p+q+u ≥ 2 in the formula (3a), and pr+qs+u > 2 in the formula (3b).

Specific examples of organopolysiloxanes represented by the above formulas (3a) or (3b) include the compounds shown below. 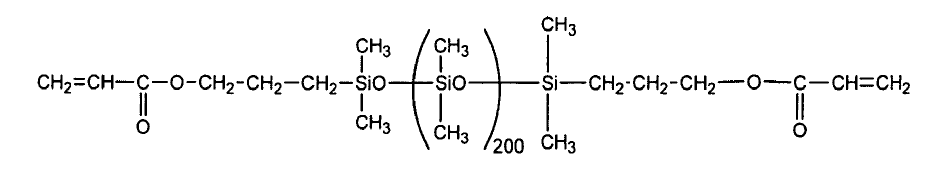 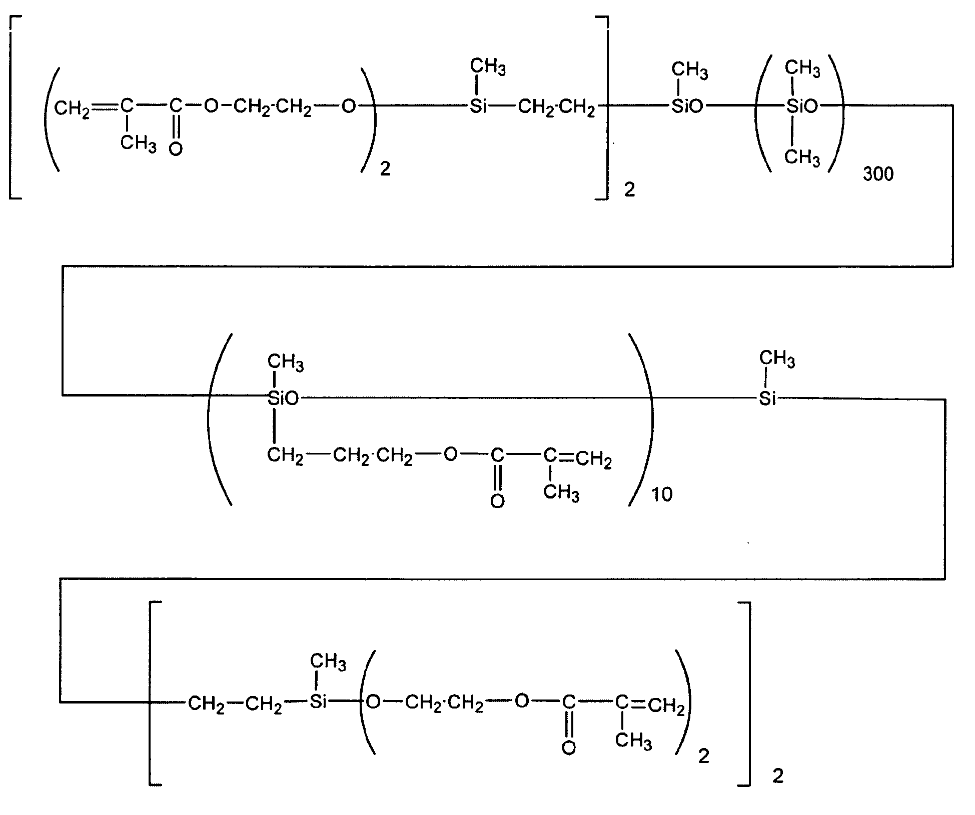 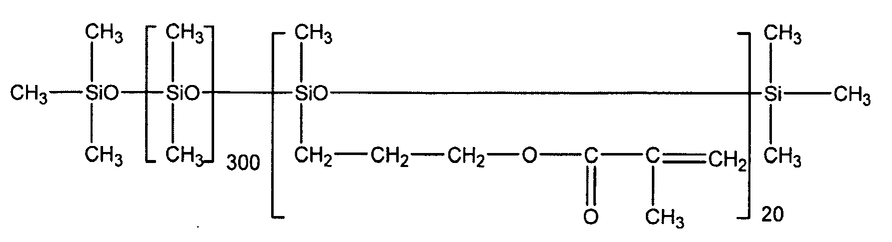 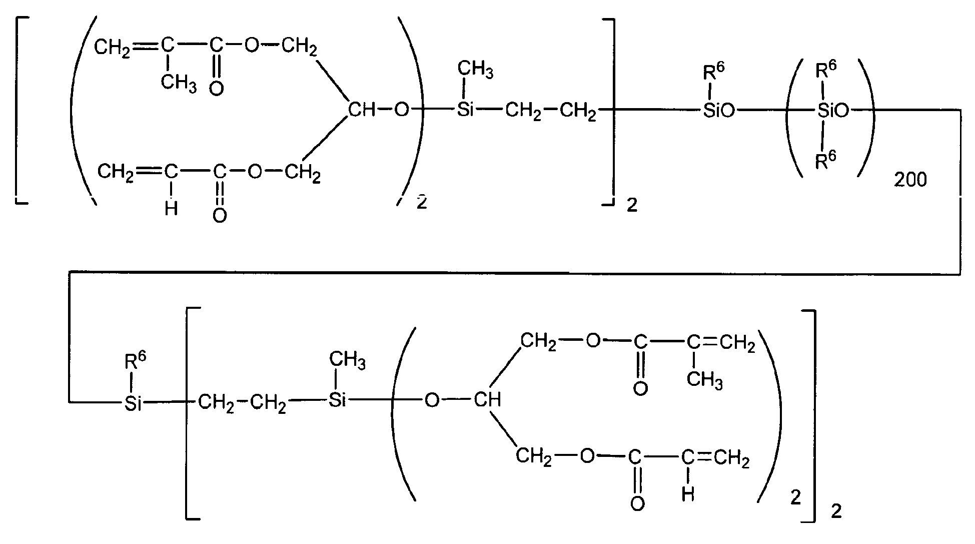 [wherein, of the R⁶ groups, 90 mol% are methyl groups and 10 mol% are phenyl groups]

### -Component (e)

The photopolymerization initiator of the component (e) has the effect of accelerating the photopolymerization of the ultraviolet light-reactive groups within the above component (d). There are no particular restrictions on the component (e), and specific examples of suitable initiators include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxycyclohexyl phenyl ketone, 2-methyl-(4-(methylthio)phenyl)-2-morpholino-1-propane, 2,2-dimethoxy2-phenylacetophenone, diethoxyacetophenone, and 2-hydroxy-2-methyl-1-phenylpropan-1-one, preferred initiators include benzophenone, 4-methoxyacetophenone, 4-methylbenzophenone, diethoxyacetophenone, 1-hydroxycyclohexyl phenyl ketone, and 2-hydroxy-2-methyl-1-phenylpropan-1-one, and more preferred initiators include diethoxyacetophenone, 1-hydroxycyclohexyl phenyl ketone, and 2-hydroxy-2-methyl-1-phenylpropan-1-one. These photopolymerization initiators may be used either alone, or in combinations of two or more different initiators.

Although there are no particular restrictions on the quantity added of the component (e), the quantity is preferably within a range from 0.01 to 10 parts by mass, more preferably from 0.1 to 3 parts by mass, and even more preferably from 0.5 to 3 parts by mass, per 100 parts by mass of the component (d). Provided the quantity added falls within the above range, the cured rubber obtained upon curing the composition of the present invention exhibits excellent physical properties such as strength and tensile strength.

### <Condensation-curable Silicone Compositions>

Specific examples of suitable condensation-curable silicone compositions include condensation-curable silicone compositions comprising:
(h) an organopolysiloxane containing at least two silicon atom-bonded hydroxyl groups or silicon atom-bonded hydrolyzable groups, preferably at both molecular chain terminals,
(i) a hydrolyzable silane and/or a partial hydrolysis-condensation product thereof as an optional component, and
(j) a condensation reaction catalyst as another optional component.

### - Component (h)

The component (h) is an organopolysiloxane that contains at least two silicon atom-bonded hydroxyl groups or silicon atom-bonded hydrolyzable groups, and functions as the base polymer of the condensation-curable silicone composition. The organopolysiloxane of the component (h) is basically a straight-chain structure or cyclic structure with no branching, in which the molecular chain comprises repeating diorganosiloxane units, although the structure may also include partial branch structures.

Incidentally, in the present specification, the "hydrolyzable group" refers to a group which can form a hydroxy group upon decomposition by the action of water.

In the organopolysiloxane of the component (h), examples of suitable hydrolyzable groups include acyloxy groups such as an acetoxy group, octanoyloxy group, or benzoyloxy group; ketoxime groups (namely, iminoxy groups) such as a dimethyl ketoxime group, methyl ethyl ketoxime group, or diethyl ketoxime group; alkoxy groups such as a methoxy group, ethoxy group, or propoxy group; alkoxyalkoxy groups such as a methoxyethoxy group, ethoxyethoxy group, or methoxypropoxy group; alkenyloxy groups such as a vinyloxy group, isopropenyloxy group, or 1-ethyl-2-methylvinyloxy group; amino groups such as a dimethylamino group, diethylamino group, butylamino group, or cyclohexylamino group; aminoxy groups such as a dimethylaminoxy group or diethylaminoxy group; and amide groups such as an N-methylacetamide group, N-ethylacetamide group, or N-methylbenzamide group.

These hydrolyzable groups are preferably positioned at both molecular chain terminals of a straight-chain diorganopolysiloxane, preferably in the form of either siloxy groups that contain two or three hydrolyzable groups, or siloxyalkyl groups that contain two or three hydrolyzable groups, including, e.g., trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups, and dialkoxyorganosiloxyethyl groups.

The other atoms or groups bonded to silicon atoms, besides the above hydroxyl groups and hydrolyzable groups are monovalent hydrocarbon groups, and examples of these monovalent hydrocarbon groups include the same unsubstituted or substituted monovalent hydrocarbon groups as those exemplified above in relation to R¹ within the above average composition formula (1).

Suitable examples of the component (h) include the organopolysiloxanes with both molecular chain terminals blocked with silicon atom-bonded hydroxyl groups or silicon atom-bonded hydrolyzable groups represented by the formulas shown below. 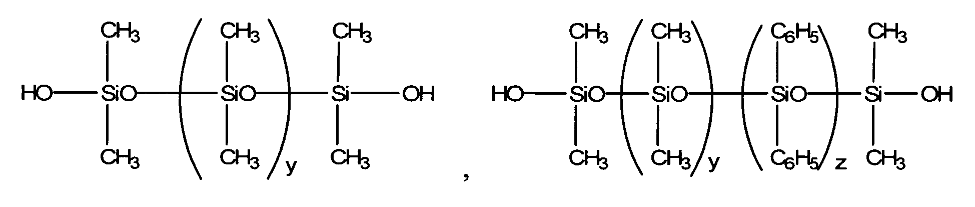 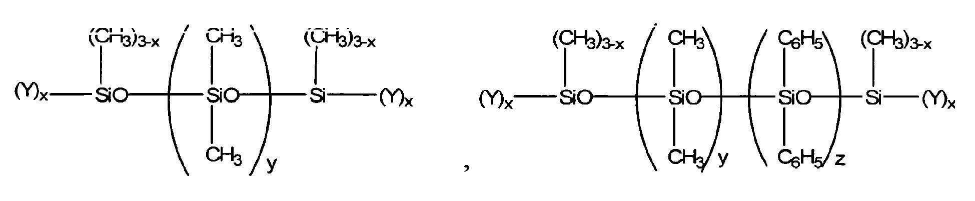 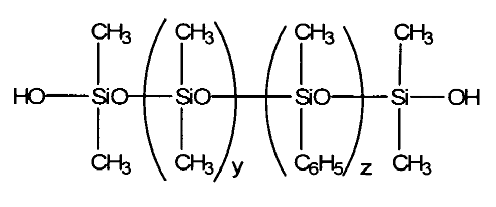 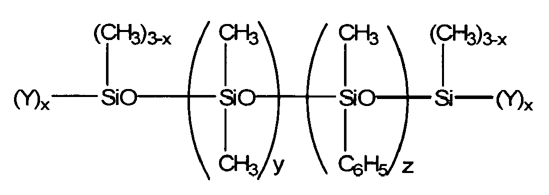 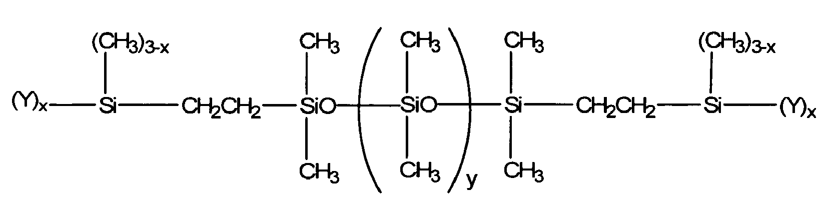 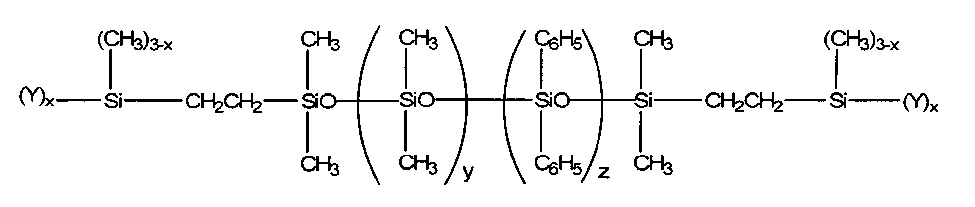 [wherein, Y represents a hydrolyzable group, x represents 1, 2, or 3, and y and z each represent an integer of 1 to 1,000]

Of the organopolysiloxanes represented by the above chemical formulas, specific examples of compounds containing hydrolyzable groups Y at both terminals include dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenylsiloxane with both molecular chain terminals blocked with trimethoxysiloxy groups, dimethylpolysiloxane with both molecular chain terminals blocked with methyldimethoxysiloxy groups, dimethylpolysiloxane with both molecular chain terminals blocked with triethoxysiloxy groups, and dimethylpolysiloxane with both molecular chain terminals blocked with 2-trimethoxysiloxyethyl groups. These compounds may be used either alone, or in combinations of two or more different compounds.

### -Component (i)

The hydrolyzable silane and/or partial hydrolysis-condensation product thereof of the component (i) is an optional component, and functions as a curing agent. In those cases where the base polymer of the component (h) is an organopolysiloxane that contains at least two silicon atom-bonded hydrolyzable groups other than silanol groups within each molecule, the addition of the component (i) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used favorably as the component (i).

Examples of preferred forms of the above hydrolyzable silane include compounds represented by a formula (4) shown below:

R⁷ₑSiX₄₋ₑ (4)

(wherein, R⁷ represents an unsubstituted or substituted monovalent hydrocarbon group, X represents a hydrolyzable group, and e represents either 0 or 1). Examples of R⁷ include alkyl groups such as a methyl group or ethyl group; alkenyl groups such as a vinyl group, allyl group or propenyl group; and aryl groups such as a phenyl group. Examples of X include all of the groups exemplified as potential silicon atom-bonded hydrolyzable groups Y within the aforementioned component (h).

Specific examples of the hydrolyzable silane include methyltriethoxysilane, vinyltriethoxysilane, vinyltriacetoxysilane, ethyl orthosilicate, and partial hydrolysis-condensation products of these compounds. These compounds may be used either alone, or in combinations of two or more different compounds.

In those cases where a hydrolyzable silane and/or partial hydrolysis-condensation product thereof of the component (i) is used, the quantity added is preferably within a range from 0.01 to 20 parts by mass, and even more preferably from 0.1 to 10 parts by mass, per 100 parts by mass of the component (h). In those cases where a component (i) is used, using a quantity within the above range ensures that the composition of the present invention exhibits particularly superior levels of storage stability and adhesiveness, as well as a favorable curing rate.

### - Component (j)

The condensation reaction catalyst of the component (j) is an optional component, and is unnecessary in cases where the above hydrolyzable silane and/or partial hydrolysis-condensation product thereof of the component (i) contains aminoxy groups, amino groups, ketoxime groups or the like. Examples of the condensation reaction catalyst of the component (j) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate, and zinc stearate; amine compounds or the salts thereof such as hexylamine and dodecylamine phosphate; quaternary ammonium salts such as benzyltriethylammonium acetate; lower fatty acid salts of alkali metals such as potassium acetate; dialkylhydroxylamines such as dimethylhydroxylamine and diethylhydroxylamine; and guanidyl group-containing organosilicon compounds. These catalysts may be used either alone, or in combinations of two or more different catalysts.

In those cases where a condensation reaction catalyst of the component (j) is used, although there are no particular restrictions on the quantity added and an amount effective as a catalyst may be used, the quantity is preferably within a range from 0.01 to 20 parts by mass, and particularly preferably from 0.1 to 10 parts by mass, per 100 parts by mass of the component (h). If the component (j) is used, then provided the quantity falls within the above range, the composition of the present invention exhibits superior levels of curability and storage stability.

### <Inorganic Filler>

An inorganic filler is blended into any of the above curable silicone compositions as an essential component. The inorganic filler is preferably a functional filler. Examples of suitable functional fillers include silica, alumina, zirconia, silicon nitride, aluminum, titanium oxide, barium oxide, zinc oxide, bismuth oxide, ferric oxide, carbon black, silver, gold, palladium-silver mixtures, ruthenium oxide, and boron nitride. These fillers are usually selected in accordance with the intended application of the composition. For example, in those cases where conductivity is desired, carbon black, silver, gold, a palladium-silver mixture, ruthenium oxide or the like is used, whereas in those cases where a dielectric performance is desired, titanium oxide, barium oxide, zinc oxide, bismuth oxide or the like is used.

In those cases where a powder or granules are used as the inorganic filler, the shape of the particles may be any shapes including irregular shapes and regular shapes such as spherical shapes, although the average particle size is preferably within a range from 0.1 to 100 µm. If the average particle size is less than 0.1 µm, then the silicone composition that functions as the raw material for the inorganic molded item may lose fluidity, causing a deterioration in workability, whereas if the average particle size exceeds 100 µm, the uniformity of the silicone composition deteriorates.

The blend quantity of the above inorganic filler is typically within a range from 1 to 60% by volume, preferably from 2 to 45% by volume, and more preferably from 5 to 30% by volume, relative to the entire silicone composition. If the blend quantity is less than 1% by volume, then the required functionality is not achieved, whereas if the quantity exceeds 60% by volume, the composition loses fluidity, causing a deterioration in workability.

During thorough mixing of the composition using a mixer or the like, in order to improve the storage stability of the resulting composition, or to impart wetness to the surfaces of the inorganic filler, the inorganic filler is preferably subjected to a preliminary surface treatment with a silane coupling agent or the like.

Examples of suitable silane coupling agents include γ-glycidoxypropyltrimethoxysilane, γ-glycidoxypropylmethyldiethoxysilane, γ-glycidoxypropyltriethoxysilane, p-styryltrimethoxysilane, γ-methacryloyloxypropylmethyldimethoxysilane, γ-methacryloyloxypropyltrimethoxysilane, γ-methacryloyloxypropylmethyldiethoxysilane, γ-methacryloyloxypropyltriethoxysilane, γ-acryloyloxypropyltrimethoxysilane, N-β-(aminoethyl)-γ-aminopropylmethyldimethoxysilane, N-β-(aminoethyl)-γ-aminopropyltrimethoxysilane, N-β-(aminoethyl)-γ-aminopropyltriethoxysilane, γ-aminopropyltrimethoxysilane, γ-aminopropyltriethoxysilane, N-phenyl-γ-aminopropyltrimethoxysilane, γ-mercaptopropylmethyldimethoxysilane, γ-mercaptopropyltrimethoxysilane, bis(triethoxypropyl) tetrasulfide, and γ-isocyanatopropyltriethoxysilane. There are no particular restrictions on the quantity of the silane coupling agent used in the surface treatment, and on the surface treatment method employed.

The quantity of the above organosilane within the silicone composition that functions as the raw material for the inorganic molded item is typically within a range from 0.1 to 10% by mass. If this quantity is less than 0.1 % by mass, then an improvement in the wettability of the surface of the inorganic filler is not achieved, whereas even if the quantity exceeds 10% by mass, the effect is saturated and the addition becomes uneconomic.

### <Molding and Curing>

In those cases where the curable silicone composition is molded into a desired shape and then cured, the shape of the molded item is arbitrary and may be selected in accordance with the intended purpose. In those cases where the inorganic molded item is formed on top of a substrate, the type of the curable silicone composition can be selected appropriately in accordance with factors such as the substrate material and dimensions. Furthermore, the molding method used for molding the silicone composition may also be selected as desired, and molding can be conducted, for example, by cast molding, transfer molding, injection molding, and coating methods. Below is a description of the curing conditions used for representative curable silicone compositions.
- The case of a Heat-curable, and particularly an Addition-curable Silicone Composition
   In the case of a heat-curable silicone composition, curing is conducted by heating. In particular, the temperature conditions used for curing an addition-curable silicone composition are preferably within a range from 60 to 180°C, and more preferably from 80 to 160°C. The curing time is typically within a range from 1 minute to 3 hours, and is preferably from 3 minutes to 2 hours. Furthermore, secondary curing may also be conducted if required, and the temperature conditions during such secondary curing are preferably at least 120°C, and more preferably within a range from 150 to 250°C. The secondary curing time is preferably within a range from 10 minutes to 48 hours, and more preferably from 30 minutes to 24 hours.
- The case of an Ultraviolet Light-curable Silicone Composition
   The ultraviolet light irradiation conditions used for curing an ultraviolet light-curable silicone composition typically employ an ultraviolet light emitting diode with an emission wavelength of 365 nm, and curing is conducted by irradiating ultraviolet light under conditions including a illumination intensity of 5 to 500 mW/cm², and preferably from 10 to 200 mW/cm², and an amount of light of 0.5 to 100 J/cm², and preferably from 10 to 50 J/cm². Furthermore, secondary curing may also be conducted if required, and the temperature conditions during such secondary curing are preferably at least 120°C, and more preferably within a range from 150 to 250°C. The secondary curing time is preferably within a range from 10 minutes to 48 hours, and even more preferably from 30 minutes to 24 hours.
- The case of a Condensation-curable Silicone Composition
   The condensation-curable silicone composition is cured by leaving the composition to stand in the air at a temperature within a range from room temperature to 200°C. Specifically, if the composition is left to stand in an atmosphere that contains moisture (for example, a humidity within a range from 25 to 90% RH, and preferably from 50 to 85% RH), then the moisture within the atmosphere causes curing. Heating may be conducted to accelerate the curing process. Furthermore, secondary curing may also be conducted if required, and the temperature conditions during such secondary curing are preferably at least 120°C, and even more preferably within a range from 150 to 250°C. The secondary curing time is preferably within a range from 10 minutes to 48 hours, and more preferably from 30 minutes to 24 hours.
- Formation of a Patterned Curable Silicone Composition Layer -

In one embodiment of the present invention, the inorganic molded item is formed in a patterned form on top of a substrate.

In this embodiment, the above silicone-based molded object is formed by using printing to apply a liquid curable silicone composition comprising an inorganic filler to the surface of a substrate in a desired pattern, thereby forming a patterned curable silicone composition layer, and then curing the patterned curable silicone composition layer to form a patterned cured silicone layer. By subjecting the thus formed patterned cured silicone layer to inorganic ceramicization, a patterned inorganic molded item is formed on the substrate.

In this embodiment, the curable silicone composition must be applied to the substrate by printing a predetermined pattern, and consequently the curable silicone composition must be liquid at room temperature. The viscosity of the composition at room temperature is preferably not more than 1,000,000 mPa·s, and more preferably not more than 100,000 mPa·s. The lower limit of the viscosity at room temperature is preferably not less than 100 mPa s, and more preferably not less than 200 mPa s.

Application by printing does not require the application and subsequent removal of a photoresist that is required in the case of a lithography process, and is consequently simpler and more attractive from a cost perspective. There are no particular restrictions on the printing method used, and suitable methods include an imprinting method, offset printing method, ink-jet printing method, or relief printing method. Of these, an imprinting method or ink-jet printing method is preferred.

Examples of the substrate to which the curable silicone composition is applied include semiconductor substrates such as silicon substrates. There are no particular restrictions on the patterning, which can be conducted in a multitude of different ways in accordance with the objective of forming the inorganic molded item. If the objective is the formation of a circuit or wiring, then the composition can be applied to the substrate in a pattern that is appropriate for the formation of the desired circuit shape or wiring shape.

### [Heating within a Non-oxidizing Atmosphere]

According to the method of the present invention, the silicone-based molded object obtained in the manner described above is heated under a non-oxidizing atmosphere at a temperature within a range from 400 to 1,500°C. As a result, the matrix portion of the silicone-based molded object (namely, the cured silicone portion other than the inorganic filler) undergoes inorganic ceramicization. In those cases where the silicone-based molded object is a patterned cured silicone layer, a patterned inorganic molded item is obtained.

The heating temperature is preferably 600°C or higher, and is more preferably 800°C or higher. Furthermore, the heating temperature is preferably 1,300°C or lower, and more preferably 1,100°C or lower. In other words, the heating temperature is preferably within a range from 600 to 1,300°C, and more preferably from 800 to 1,100°C. This heat treatment causes cleavage of carbon-hydrogen bonds that exist within the silicone and elimination of the hydrogen, which causes the inorganic ceramicization to proceed. However, almost no elimination of the silicon and carbon within the silicone molded object occurs, and these elements are retained effectively within the product.

The above reaction proceeds more favorably in the presence of a small quantity of a group 8 element such as platinum, palladium or rhodium. The quantity of this group 8 element within the silicone-based molded object is preferably within a range from 0.1 to 5,000 ppm, and is more preferably from 10 to 2,000 ppm, and is even more preferably from 50 to 1,000 ppm. In this case, the required quantity of the group 8 element may be added, for example, to the curable silicone composition that functions as the starting material. An addition-curable silicone composition usually includes a platinum group metal as a catalyst. In the absence of a group 8 element, the above heat treatment is preferably conducted at a temperature of 600°C or higher.

The heating is conducted under a non-oxidizing atmosphere, and preferably under an inert gas atmosphere. Examples of suitable inert gases include nitrogen gas, argon gas and helium gas, and from a practical perspective, nitrogen gas is preferred. The end point of the heat treatment is indicated by the point where even if the heated product is heated for one hour at 600°C, the resulting weight reduction is less than 1% by weight.

### [Inorganic Molded Item]

As described above, an inorganic molded item of the present invention, obtained by heating the silicone-based molded object at a temperature of 400 to 1,500°C under a non-oxidizing atmosphere, is composed of a matrix comprising an inorganic ceramic, and an inorganic filler dispersed within the matrix. The matrix portion typically comprises silicon, carbon and oxygen, and is thought to be an amorphous inorganic ceramic material in which the average elemental ratio between silicon, carbon and oxygen is represented by a compositional formula (4) shown below:

SiCᵥO_{w} (4)

(wherein, v is a number that satisfies 0.5 ≤ v ≤ 3.0, and w is a number that satisfies 1.0 ≤ w ≤ 4.0), the material has a siloxane skeleton formed of Si-O-Si bonds, and the hydrogen mass fraction is within a range from 0 to 1% by mass.

### EXAMPLES

As follows is a more detailed description of the present invention using a series of examples. In the following description, "Me" represents a methyl group and "Vi" represents a vinyl group. The tests in the following examples were conducted at room temperature. Unless stated otherwise, viscosity values refer to values measured at 25°C.

### [Example 1]

In the preparation of an addition-curable silicone rubber composition comprising:
(A) 90 parts by mass of a diorganopolysiloxane containing vinyl groups within each molecule, represented by a formula shown below: 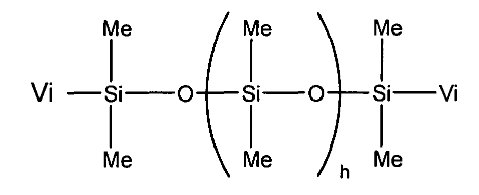 (wherein, h represents a number that yields a viscosity at 25°C for the siloxane of 600 mPa·s),
(B-1) 10 parts by mass of an organohydrogenpolysiloxane represented by a formula shown below: 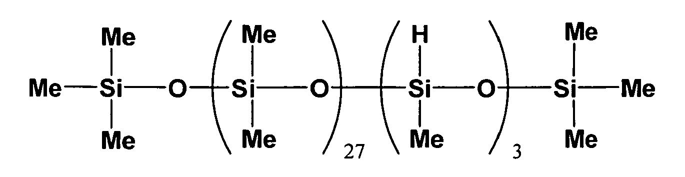
(B-2) 0.15 parts by mass of a toluene solution of a complex of platinum and divinyltetramethyldisiloxane (platinum element content: 0.5% by mass, a hydrosilylation catalyst), and
(C) a sufficient quantity of a fumed silica (manufactured by Shin-Etsu Chemical Co., Ltd., average particle size: 2.0 µm) to provide 15% by volume of the entire composition, first, the above components (A), (B-1) and (C) were combined in a planetary mixer (a registered trademark of a mixing device, manufactured by Inoue Manufacturing Co., Ltd.), and were stirred for one hour at room temperature, and the component (B-2) was then added and stirring was continued at room temperature for further 30 minutes.

The thus obtained silicone rubber composition was poured into a mold with a depth of 10 mm and with a surface that included indentations with a width of 100 µm, and the composition was then cured in air by heating at 125°C for one hour. As a result, a sheet-like silicone molded object with a thickness of 10 mm and having 100 µm indentations formed in the surface was obtained.

Subsequently, the silicone rubber molded object was placed in an alumina boat, was subsequently heated under a nitrogen gas atmosphere inside a horizontal tubular furnace, by raising the temperature to 1,000°C at a rate of temperature increase of 100°C/hour over an approximately 10-hour period, and was then held at 1,000°C for a further one hour before being cooled to room temperature. This process yielded a black inorganic molded item. The mass loss caused by the heat treatment was 20.6%, and the compositional atomic ratio was silicon / carbon / oxygen = 1.0/1.2/1.6. Furthermore, inspection of the surface of the molded item using a SEM (scanning electron microscope) revealed that the shape and dimensions prior to heating had been maintained.

### [Example 2]

With the exception of replacing the fumed silica (C) of the example 1 with (C') a sufficient quantity of an acetylene black (product name: Denka Black, manufactured by Denki Kagaku Kogyo K.K.) to provide 15% by volume of the entire composition, an addition-curable silicone rubber composition was prepared in the same manner as the example 1.

The thus obtained composition was poured into a screen mask with a thickness of 1 mm having a 1 cm square opening, and a squeegee was used to transfer the composition to an alumina substrate. Subsequently, the composition was heated in air at 125°C for one hour, thus forming a 1 cm square sheet-like silicone rubber molded object of thickness 1 mm on the alumina substrate. Measurement of the electrical resistivity of the silicone rubber molded object yielded a result of 1 kΩ/square. Subsequently, the alumina substrate with the silicone rubber molded object formed thereon was placed in an alumina boat, was subsequently heated under a nitrogen gas atmosphere inside a horizontal tubular furnace by raising the temperature to 1,000°C at a rate of temperature increase of 100°C/hour over an approximately 10-hour period, and was then held at 1,000°C for a further one hour before being cooled to room temperature. This process yielded a black inorganic molded item. The mass loss caused by the heat treatment was 15.6%. The elemental composition of the inorganic molded item was carbon / silicon / oxygen = 2.1/1.0/1.0. The inorganic molded item retained the 1 cm square shape and dimensions. Furthermore, measurement of the resistivity of the inorganic molded item yielded a result of 200 Ω/square.

### [Example 3]

With the exception of using an amorphous alumina (manufactured by Showa Denko K.K., average particle size: 1.7 µm) as the component (C) instead of the fumed silica, a black inorganic molded item was produced in the same manner as the example 1. The mass loss caused by the heat treatment was 19.8%, and the compositional atomic ratio was silicon / carbon / oxygen = 1.0/1.3/1.6. Furthermore, inspection of the surface of the molded item using a SEM revealed that the surface indentations with a width of 100 µm had maintained their shape and dimensions from prior to heating.

### [Comparative Example 1]

With the exception of altering the atmosphere during heating within the horizontal tubular furnace to an air atmosphere, a silicone molded object was treated in the same manner as the example 1. As a result, a white inorganic material was obtained. The mass loss caused by the heat treatment was 44.6%, and the compositional atomic ratio of the product was silicon / carbon / oxygen = 1.0/0/1.9. Furthermore, an attempt was made to grasp the heat-treated sample with a pair of tweezers, but the sample broke easily and could not be grasped. Furthermore, because of its extreme brittleness, preparation of a sample for SEM inspection was impossible.

### [Example 4]

(D) 100 parts by mass of a liquid organopolysiloxane represented by a formula shown below: 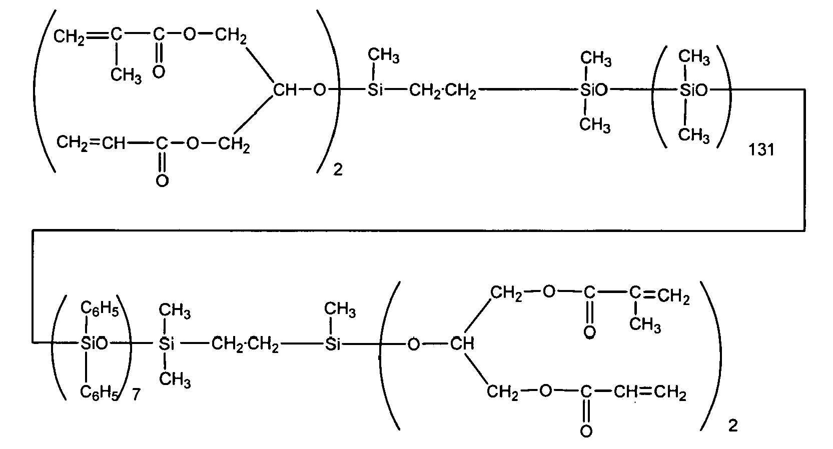
(E) 2 parts by mass of 2-hydroxy-2-methyl-1-phenylpropan-1-one,
(F-1) 1 part by mass of 2,4,6-trimethylbenzoyldiphenylphosphine oxide,
(F-2) 1 part by mass of a partial hydrolysis-condensation product of tetramethoxysilane (a methoxysiloxane oligomer),
(G) 0.1 parts by mass of a titanium chelate compound represented by a formula shown below: 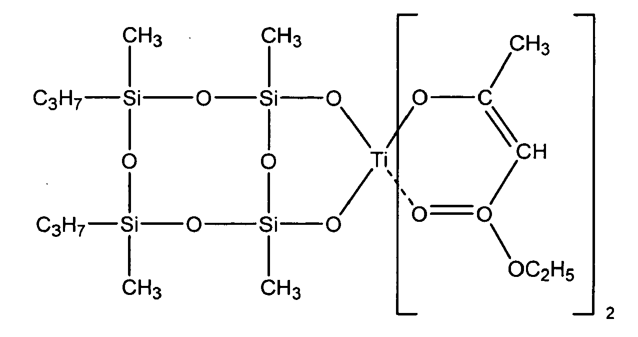 and a sufficient quantity of the same fumed silica as that used as the component (C) in the example 1 to provide 15% by volume of the entire composition were mixed together, yielding an ultraviolet light-curable silicone rubber composition.

The thus prepared composition was poured into a mold with a depth of 10 mm and with a surface that included indentations with a width of 100 µm. The composition was then cured by irradiation with ultraviolet light from two metal halide mercury lamps (illumination intensity: 80 W/cm², energy dose: 400 mJ/s). As a result, a sheet-like silicone molded object with a thickness of 10 mm and having 100 µm indentations formed in the surface was obtained.

Subsequently, the thus obtained silicone rubber molded object was subjected to heat treatment under a nitrogen gas atmosphere in the same manner as the example 1, yielding a black inorganic molded item. The mass loss caused by the heat treatment was 22.2%, and the compositional atomic ratio was silicon / carbon / oxygen = 1.0/1.3/1.7. Furthermore, inspection of the surface of the molded item using a SEM revealed that the surface indentations with a width of 100 µm had retained their shape and dimensions from prior to heating.

### [Example 5]

(H) 100 parts by mass of an organopolysiloxane represented by a formula shown below: 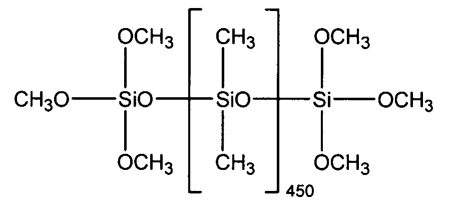
(I) 0.1 parts by mass of a titanium chelate catalyst, and
(J) a sufficient quantity of the fumed silica used as the component (C) in the example 1 to provide 15% by volume of the entire composition were mixed together, yielding a condensation-curable silicone rubber composition.

The thus prepared composition was poured into a mold with a depth of 10 mm and with a surface that included indentations with a width of 100 µm. The composition was then cured by heating at 180°C for one hour. As a result, a sheet-like silicone molded object with a thickness of 10 mm and having 100 µm indentations formed in the surface was obtained.

Subsequently, the thus obtained silicone molded object was subjected to heat treatment under a nitrogen gas atmosphere in the same manner as the example 1, yielding a black inorganic molded item. The mass loss caused by the heat treatment was 20.2%, and the compositional atomic ratio was silicon / carbon / oxygen = 1.0/1.2/1.7. Furthermore, inspection of the surface of the molded item using a SEM revealed that the surface indentations with a width of 100 µm had retained their shape and dimensions from prior to heating.

### [Industrial Applicability]

The method of the present invention can be used as a low-temperature sintering method capable of cofiring conductors with a high degree of electric conductivity, and can also be used within electronic mounting techniques. The patterned inorganic molded items formed using the method of the present invention can be formed as resistors, dielectric materials or conductors. Accordingly, they are useful in the preparation of conducting circuits, resistance circuits, dielectric circuits and the like.

## Claims

1. A method of producing an inorganic molded item comprising a matrix composed of an inorganic ceramic and an inorganic filler dispersed within the matrix, the method comprising the step of heating a silicone-based molded object comprising a matrix composed of a solid silicone and an inorganic filler dispersed within the matrix under a non-oxidizing atmosphere at a temperature within a range from 400 to 1,500°C, thereby subjecting the solid silicone to inorganic ceramicization.

2. The method of producing an inorganic molded item according to claim 1, wherein the silicone-based molded object is obtained by curing a curable silicone composition containing an inorganic filler.

3. The method of producing an inorganic molded item according to claim 2, wherein the curable silicone composition is a heat-curable, photocurable or condensation-curable silicone composition.

4. The method of producing an inorganic molded item according to claim 3, wherein the curable silicone composition is a heat-curable silicone composition, and the heat-curable silicone composition is an addition-curable silicone composition.

5. The method of producing an inorganic molded item according to any one of claims 2 through 4, wherein a quantity of the inorganic filler within the curable silicone composition is within a range from 1 to 60% by volume of the entire composition.

6. The method of producing an inorganic molded item according to any one of claims 1 through 5, wherein the silicone-based molded object is a patterned cured silicone layer obtained by applying a liquid curable silicone composition containing an inorganic filler to a substrate in a desired pattern by printing, thereby forming a patterned curable silicone composition layer, and subsequently curing the patterned curable silicone composition layer.

7. The method of producing an inorganic molded item according to claim 6, wherein application of the curable silicone composition to a substrate by printing is conducted using an imprinting method, an offset printing method, an ink-jet printing method, or a relief printing method.

8. An inorganic molded item comprising a matrix composed of an inorganic ceramic and an inorganic filler dispersed within the matrix, obtainable by the method defined in any one of claims 1 through 7.

9. The inorganic molded item according to claim 8, wherein the inorganic molded item is a patterned inorganic molded item formed on a substrate.
